# EUROPEAN PATENT SPECIFICATION

(11) **EP 3 383 174 B1**
(45) Date of publication and mention of the grant of the patent: **28.02.2024**
(21) Application number: 16805464.1
(22) Date of filing: 05.12.2016
(51) Int. Cl.: A01M 1/14

(54) **STICKY TRAP FOR INSECTS**
KLEBEFALLE FÜR INSEKTEN
PIÈGE ADHÉSIF POUR INSECTES

(30) Priority: 03.12.2015 ES 201531757
(43) Date of publication of application: 10.10.2018
(73) Proprietor: Zobele Holding SpA, 38100 Trento (IT)
(72) Inventor: GOBBER, Cedric, 08019 Barcelona (ES); LLORENTE ALONSO, Joaquim, 08019 Barcelona (ES); JONSSON, Åsa, 38100 Trento (IT)
(74) Representative: Herrero & Asociados, S.L.
(86) International application number: PCT/EP2016/079722
(87) International publication number: WO 2017/093555

(56) References cited:
- FR-A1- 2 763 215
- JP-A- 2003 274 833
- US-A1- 2009 183 419
- US-A1- 2014 083 001

## Description

The present invention relates to an insect trap that keeps insects adhered to a surface with adhesive characteristics.

### Background of the invention

The use of traps for insects, such as moths, is common, where these traps are formed by a flat sheet that comprises a surface with adhesive characteristics.

For example, it is common to place a trap of this type in cupboards where food is stored, so that the insects remain adhered to said adhesive surface.

Furthermore, in order to attract insects, it is also common that said surface with adhesive characteristics is impregnated with aromas that make insects rest on the adhesive surface, where they remain trapped.

Although this type of insect trap formed by a sheet that defines a flat adhesive surface is suitable for use in spaces such as the inside of a cupboard, it is not suitable for use in other places, such as on a table in a dining room or restaurant.

JP2003274833A discloses a moldable capturing container for insect pests and a capturing apparatus for the insect pests using the container, which is obtained by composing a container body of a substrate provided with a pressure-sensitive adhesive layer formed on a substrate sheet and applying mold release paper onto the surface thereof.

Therefore, the objective of the present invention is to provide a more versatile insect trap that can be used in any space desired, such as a restaurant table, a bar top, etc.

### Description of the invention

The insect trap of the invention as claimed in independent claim 1 resolves the aforementioned drawbacks and has other advantages which are described below.

The insect trap according to the present invention is defined by claim 1 and it is formed from a sheet that defines an adhesive surface, and said sheet comprises on two opposite ends engaging means for engaging said opposite ends together, defining a curved adhesive surface when said opposite ends are engaged together.

According to a preferred embodiment, said engaging means comprise a complementary tab and slot, for example, of a semicircular shape.

Said sheet comprises a curved folding line that defines a base of the insect trap when said opposite ends are engaged together.

Said curved folding line defines an inner cone when said opposite ends are engaged together, and is preferably die cast in a discontinuous way.

Preferably, said adhesive surface encompasses a part of one side of said sheet, which is covered by a protection sheet before its first use; this facilitates its handling and prevents the loss of its properties before its use.

Thanks to the presence of said engaging means which allow the insect trap to have a curved adhesive surface, the insect trap can be used in any space, including inside a cupboard or on a restaurant table or bar top, for example.

### Brief description of the drawings

For the purpose of helping to make the foregoing description more readily understandable, it is accompanied by a set of drawings that, schematically and by way of illustration and not limitation, represent an embodiment.
Figure 1 is a plan view of the sheet that forms the insect trap not forming part of the present invention;
Figure 2 is a perspective view of the insect trap not forming part of the present invention;
Figure 3 is a plan view of the sheet that forms the insect trap of the present invention; and
Figure 4 is a perspective view of the insect trap of the present invention.

### Description of a preferred embodiment

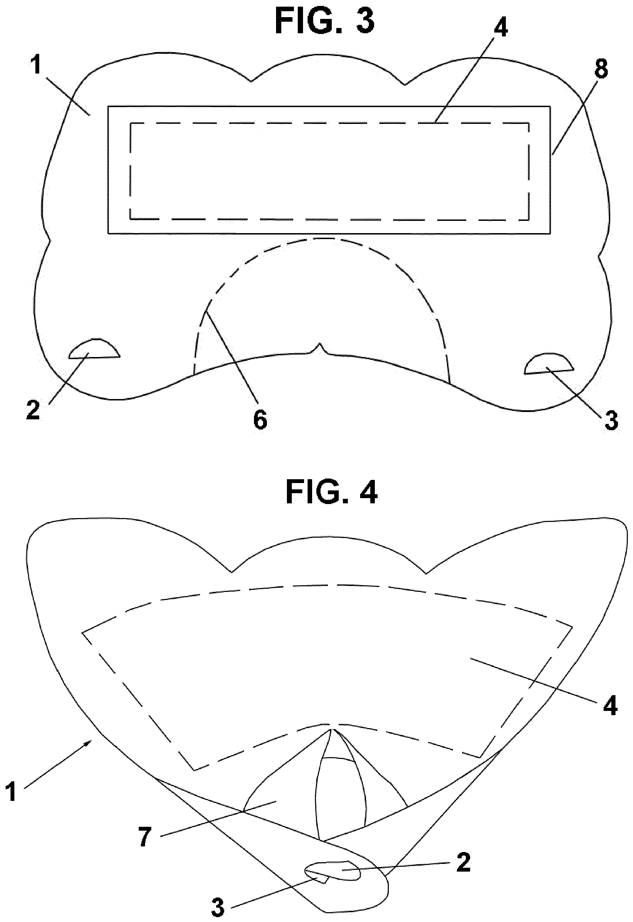

The insect trap according to the present invention is formed from a sheet 1 that is shown in its unfolded position in figure 3.

This sheet 1 comprises engaging means on two opposite ends in order to be engaged together, defining a curved surface.

In the embodiment represented in figure 3, said engaging means are formed by a complementary tab 2 and a slot 3, for example, of a semicircular shape.

In its mounted position, shown in figure 4, the insect trap according to the present invention defines a curved surface 4 that has adhesive characteristics so that the insects remain adhered to it when they rest on it. In order to attract the insects to said adhesive surface 4, the surface can be impregnated with aromas or have bright colors that attract them, where the adhesive surface is brighter or has a greater contrast than the rest of the sheet 1.

Preferably, said adhesive surface 4 only encompasses a part of one side of said sheet 1, which is covered by a protection sheet 8 before its first use.

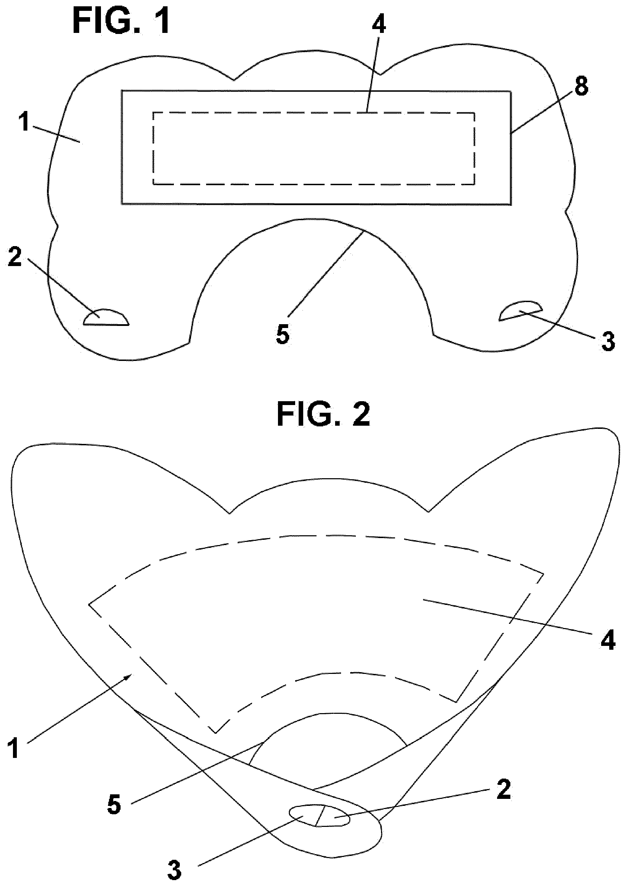

In the mounted position, the insect trap according to the present invention can be placed on a flat surface, such as a table. To this end, the sheet 1 according to an example not forming part of the present invention, shown in Figs. 1 and 2, comprises a curved edge 5 that defines a base for the placement of the insect trap on a flat surface.

Figure 3 shows an embodiment of the insect trap according to the present invention, the only difference from the example shown in figures 1 and 2 being that the sheet comprises a curved folding line 6 that defines said base for the placement of the insect trap on a flat surface.

This folding line defines an inner cone 7 in the mounted position of the insect trap according to the present invention, as shown in figure 4, which increases the adhesive surface to trap insects.

To facilitate transport thereof, the sheet 1 is provided to the user unfolded, as shown in figure 1. In order to use it, the user must simply engage the ends of the sheet 1 together, for example, by introducing the complementary tab 2 into its slot 3. Once it is in its mounted position or position of use, the insect trap according to the present invention can be placed on a flat surface, for example, on a table or even inside a cupboard.

Despite the fact that reference has been made to a specific embodiment of the invention, it is evident for the person skilled in the art that numerous variations and changes may be made to the insect trap described, and that all the aforementioned details may be substituted by other technically equivalent ones, without detracting from the scope of protection defined by the attached claims.

## Claims

1. An insect trap formed from a sheet (1) that defines an adhesive surface (4), said sheet (1) comprising on two opposite ends engaging means (2, 3) for engaging said opposite ends together, so that said adhesive surface (4) is curved when said opposite ends are engaged together,
**characterized in that** said sheet (1) comprises a curved folding line (6) defining a substantially semi-circular sheet portion in an unfolded position, said curved folding line (6) defining a base for the insect trap when said opposite ends are engaged together, the substantially semicircular sheet portion forming an inner cone (7) in a mounted position when said opposite ends are engaged together.

2. The insect trap according to claim 1, wherein said engaging means comprise a complementary tab (2) and slot (3).

3. The insect trap according to claim 2, wherein said tab (2) and said slot (3) have a semicircular shape.

4. The insect trap according to claim 1, **characterized in that** said curved folding line (6) is die cut in a discontinuous way.

5. The insect trap according to claim 1, **characterized in that** said adhesive surface (4) encompasses a part of one side of said sheet (1), which is covered by a protection sheet (8) before its first use.

## Patentansprüche

1. Insektenfalle, die aus einer Lage (1) gebildet wird, die eine Klebefläche (4) definiert, wobei die Lage (1) an zwei gegenüberliegenden Enden Eingriffsmittel (2, 3) zum Zusammenfügen der gegenüberliegenden Enden umfasst, so dass die Klebefläche (4) gekrümmt ist, wenn die gegenüberliegenden Enden zusammengefügt sind,
**dadurch gekennzeichnet, dass** die Lage (1) eine gekrümmte Falzlinie (6) aufweist, die einen im Wesentlichen halbkreisförmigen Teil der Lage in einer nicht gefalteten Position definiert, wobei die gekrümmte Falzlinie (6) eine Basis für die Insektenfalle definiert wenn die gegenüberliegenden Enden miteinander zusammengefügt sind, wobei der im Wesentlichen halbkreisförmige Teil der Lage in montierter Stellung wenn die gegenüberliegenden Enden zusammengefügt sind einen inneren Kegel (7) bildet.

2. Insektenfalle nach Anspruch 1, wobei die Eingriffsmittel eine komplementäre Lasche (2) und einen Schlitz (3) umfassen.

3. Insektenfalle nach Anspruch 2, wobei die Lasche (2) und der Schlitz (3) eine halbkreisförmige Form aufweisen.

4. Insektenfalle nach Anspruch 1, **dadurch gekennzeichnet, dass** die gekrümmte Falzlinie (6) diskontinuierlich gestanzt ist.

5. Insektenfalle nach Anspruch 1, **dadurch gekennzeichnet, dass** die Klebefläche (4) einen Teil einer Seite der Lage (1) umfasst, die vor der ersten Verwendung mit einer Schutzlage (8) abgedeckt ist.

## Revendications

1. Piège à insectes formé à partir d'une feuille (1) qui définit une surface adhésive (4), ladite feuille (1) comprenant, sur deux extrémités opposées, des moyens de mise en prise (2, 3) pour mettre en prise lesdites extrémités opposées ensemble, de sorte que ladite surface adhésive (4) est courbée lorsque lesdites extrémités opposées sont mises en prise ensemble,
**caractérisé en ce que** ladite feuille (1) comprend une ligne de pliage courbée (6) définissant une partie de feuille sensiblement semi-circulaire dans une position dépliée, ladite ligne de pliage courbée (6) définissant une base pour le piège à insectes lorsque lesdites extrémités opposées sont mises en prise ensemble, la partie de feuille sensiblement semi-circulaire formant un cône interne (7) dans une position montée lorsque lesdites extrémités opposées sont mises en prise ensemble.

2. Piège à insectes selon la revendication 1, dans lequel lesdits moyens de mise en prise comprennent une languette (2) et une fente (3) complémentaires.

3. Piège à insectes selon la revendication 2, dans lequel ladite languette (2) et ladite fente (3) ont une forme semi-circulaire.

4. Piège à insectes selon la revendication 1, **caractérisé en ce que** ladite ligne de pliage courbée (6) est découpée à l'emporte-pièce d'une manière discontinue.

5. Piège à insectes selon la revendication 1, **caractérisé en ce que** ladite surface adhésive (4) englobe une partie d'un côté de ladite feuille (1), qui est recouverte par une feuille de protection (8) avant sa première utilisation.
